# EUROPÄISCHE PATENTSCHRIFT

(11) **EP 3 815 516 B1**
(45) Veröffentlichungstag und Bekanntmachung des Hinweises auf die Patenterteilung: **18.12.2024**
(21) Anmeldenummer: 20203304.9
(22) Anmeldetag: 22.10.2020
(51) Int. Cl.: A01G 13/02, E04C 3/08

(54) **STÜTZSTRUKTUR FÜR PFLANZENKULTUREN**
SUPPORT STRUCTURE FOR PLANT CULTURES
STRUCTURE DE SUPPORT POUR CULTURES VÉGÉTALES

(30) Priorität: 29.10.2019 DE 102019129222
(43) Veröffentlichungstag der Anmeldung: 05.05.2021
(73) Patentinhaber: BayWa Aktiengesellschaft, 81925 München (DE)
(72) Erfinder: HOLZWARTH, Rudolf, 88255 Baindt (DE); BERRETH, Klaus, 73479 Ellwangen (DE)
(74) Vertreter: Pfiz, Thomas

(56) Entgegenhaltungen:
- EP-A2- 0 980 938
- WO-A1-2011/098619
- AT-U1- 13 915
- DE-A1- 19 515 638
- DE-A1- 4 036 293

## Beschreibung

Die Erfindung betrifft eine Stützstruktur für Pflanzenkulturen mit mindestens einem Stützpfosten, der als räumliches Gittergebilde aus längslaufenden Längsstäben und aus die Längsstäbe im seitlichen Abstand voneinander zusammenhaltenden Verbindungsdrähten zusammengesetzt ist, und einem in das Gittergebilde eingesetzten Funktionsteil für eine Funktion aus der Gruppe Bodenverankerung, Bodenabstützung, Stabilisierung, Spannseilabspannung, Pflanzenhalterung.

Eine ähnliche Vorrichtung ist aus der WO 2011/098619 A1 bekannt. Dort verlaufen eine Mehrzahl von Verbindungsdrähten zwischen allen Längsstäben, so dass ein allseitig gitterartig geschlossenes Gebilde erreicht wird, was aber einen erheblichen Herstellungsaufwand bedingt. Zudem ist es dort vorgesehen, Funktionsteile direkt an den Längsstäben anzuschweißen, wodurch die Montage vor Ort und ggf. auch der Rückbau erschwert wird.

Ausgehend hiervon liegt der Erfindung die Aufgabe zugrunde, die im Stand der Technik bekannten Stützstrukturen weiter zu verbessern und eine einfach herstell- und montierbare Konstruktion mit erhöhtem Gebrauchsnutzen anzugeben.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Eine Erfindungsaspekt sieht vor, dass das Funktionsteil in einer funktionalen Stellung an den Verbindungsdrähten gegen eine Relativbewegung längs des Stützpfostens gesichert ist, wobei das Funktionsteil über ein Sicherungselement und/oder über eine Formschlussverbindung mit den Verbindungsdrähten in Eingriff bringbar ist. Auf diese Weise können die Verbindungsdrähte eine Doppelfunktion im Sinne einer einfachen Fachwerkkonstruktion und einer vereinfachten Sicherung von Anbau- bzw. Funktionsteilen erfüllen. Dadurch kann der Montagevorgang des Funktionsteils in einem Fügeschritt und einem Sicherungsschritt gegen Lösen von der Gitterstruktur besonders einfach vor Ort erfolgen.

Dies lässt sich weitgehend werkzeuglos einfach dadurch bewerkstelligen, dass das Sicherungselement in einen Durchbruch des Funktionsteils lösbar einsteckbar ist. Auf diese Weise wird auch eine einfache Demontagemöglichkeit geschaffen.

In diesem Zusammenhang ist es auch vorteilhaft, wenn das Sicherungselement an einem schräg zur Längsachse des Stützpfostens verlaufenden Abschnitt der Verbindungsdrähte axial abgestützt ist.

Eine besonders einfache Konstruktion sieht vor, dass das Sicherungselement durch einen Bolzen oder einen ggf. winkligen Profilstab gebildet ist.

Für eine Vorpositionierung und Lastaufnahme ist es vorteilhaft, wenn das Funktionsteil einen in das Gittergebilde einführbaren oder daran ansetzbaren Verbindungsabschnitt aufweist.

Vorteilhafterweise besitzt ein als Fußteil ausgebildetes Funktionsteil eine in den Boden einsteckbare oder einschraubbare Spitze.

Eine weitere vorteilhafte Ausgestaltung für die Aufspannung von Dachbahnen sieht vor, dass ein als Kopfteil ausgebildetes Funktionsteil eine im Einbauzustand nach oben weisende Seilhalterung für ein firstseitiges Spannseil aufweist.

Eine vorteilhafte Ausführung sieht vor, dass zwei Verbindungsdrähte über die Länge der Längsstäbe durchgehend (ununterbrochen) verlaufen und dabei an Verbindungsstellen abwechselnd mit einem eine Hauptstützstrebe bildenden gemeinsamen Längsstab und jeweils einem eine Nebenstützstrebe bildenden weiteren Längsstab fest verbunden sind, so dass der Gitterträger zwischen den Nebenstützstreben einseitig offen ist und zwischen den Nebenstützstreben kein Verbindungsdraht verläuft. Dadurch wird die Möglichkeit geschaffen, die Verbindungsdrähte in einem durchgehenden Verlauf geeignet zu biegen und zu verbinden, so dass die Herstellung erheblich vereinfacht wird. Der so geschaffene, einseitig offene Gitterträger lässt sich auf einfachere Weise handhaben, bspw. stapeln und mit Anbauteilen bestücken. Zudem wird bei reduziertem Materialbedarf ein stabiles Pfostendesign geschaffen. Dadurch ist auch in Pflanzenkulturen, wo häufig auf ausgedehntem Gebiet eine Vielzahl von Aufspannpunkten erforderlich ist, ein wirtschaftlicher Einsatz noch möglich. Zugleich erlaubt die prinzipiell wahlfrei bestimmbare Länge der Gitterträger eine einfache Anpassung an unterschiedliche Höhenverhältnisse des Terrains durch geeignete Ablängung. Hier kommt auch zugute, dass durch die wellenförmigen Verbindungsdrähte eine über die Pfostenlänge vielfach wiederkehrende Fachwerkstruktur geschaffen wird.

Vorteilhafterweise verlaufen die Verbindungsdrähte in jeweils einer Ebene, wobei die beiden durch die Verbindungsdrähte aufgespannten (gedachten) Ebenen einen spitzen Winkel miteinander einschließen, wodurch auch eine hinreichende Querstabilität erreicht wird.

Eine weitere vorteilhafte Ausgestaltung sieht vor, dass die Verbindungsdrähte über gebogene Scheitelstellen zickzackförmig oder wellenförmig in jeweils einer Ebene verlaufen, und dass die Scheitelstellen stoffschlüssig, vorzugsweise über Schweißverbindungen mit den Längsstäben verbunden sind. Dadurch müssen beim Zusammenbau nur wenige Bauteile gehandhabt werden, wobei eine maschinelle Verarbeitung vereinfacht wird.

Herstellungstechnisch ist es auch günstig, wenn die Nebenstützstreben an den voneinander abgewandten Außenbereichen der Verbindungsdrähte angeordnet sind, und wenn die Hauptstützstrebe im Verbindungsbereich zwischen den Verbindungsdrähten angeordnet ist.

Im Folgenden wird die Erfindung anhand der in der Zeichnung in schematischer Weise dargestellten Ausführungsbeispiele näher erläutert. Es zeigen
- Fig. 1: eine Stützstruktur für Pflanzenkulturen mit zwei Stützpfosten in Seitenansicht;
- Fig. 2: einen Abschnitt eines als Gittergebilde ausgebildeten Stützpfostens in räumlicher Darstellung;
- Fig. 3: ein Fußteil der Stützpfostens nach Fig. 1;
- Fig. 4: einen oberen Verbindungsabschnitt des Fußteils in einer gegenüber Fig. 3 gedrehten, vergrößerten Seitenansicht;
- Fig. 5 und 6: das Fußteil in Funktionsstellung in dem Gittergebilde in ausschnittsweiser Seitenansicht und Draufsicht;
- Fig. 7: ein in den Boden einschraubbares Fußteil in Fig. 1 entsprechender Darstellung;
- Fig. 8: eine steckbare Ausführungsform eines Fußteils mit einem gegenüber Fig. 3 modifizierten oberen Verbindungsabschnitt;
- Fig. 9 und 10: das Fußteil nach Fig. 8 in Funktionsstellung in dem Gittergebilde in ausschnittsweiser Seitenansicht und Draufsicht;
- Fig. 11 und 12: ein Kopfteil der Stützpfostens nach Fig. 1 in Funktionsstellung in Draufsicht und Seitenansicht;
- Fig. 13 und 14: ein weitere Ausführungsform eines Kopfteils in Fig. 11 und 12 entsprechender Darstellung;
- Fig. 15 und 16: eine in das Gittergebilde eingesetzte gewinkelte Bodenabstützung in zwei Seitenansichten;
- Fig. 17 und 18: eine in das Gittergebilde eingesetzte Stabilisierungsplatte in zwei Seitenansichten;
- Fig. 19 und 20: eine Drahtführung in einer Seitenansicht und in Draufsicht in Funktionsstellung in dem Gittergebilde.

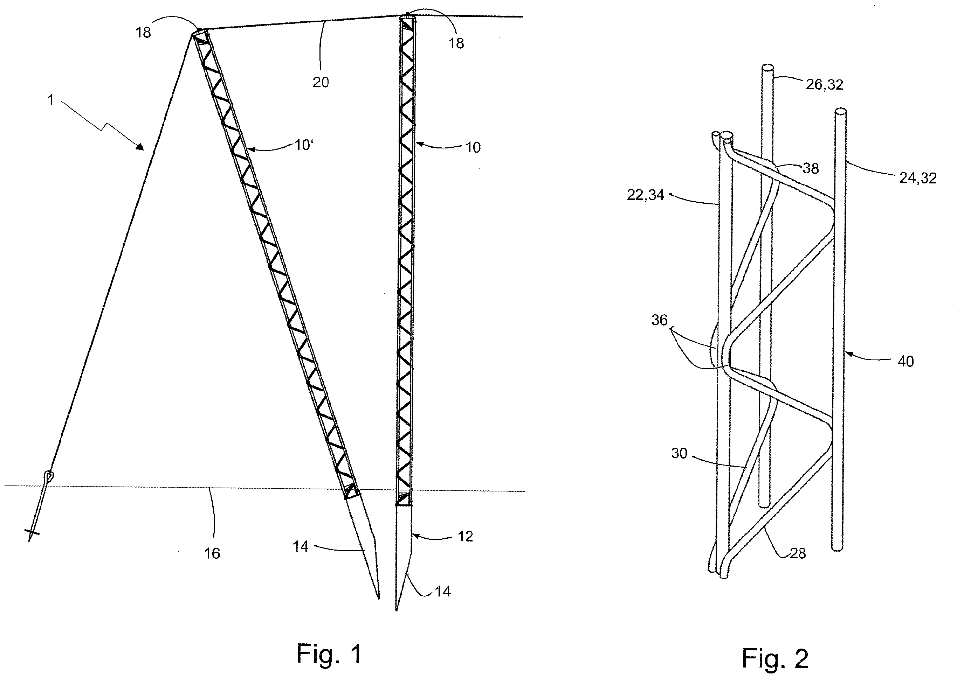

Die in Fig. 1 gezeigte Stützstruktur 1 ermöglicht eine Wetterschutzaufspannung und/oder Pflanzenhalterung in Pflanzenkulturen, beispielsweise Obstplantagen. Zu diesem Zweck ist mindestens ein Stützpfosten 10, 10' vorgesehen, der als fachwerkartiges, räumliches Gittergebilde ausgebildet ist, in welches mindestens ein Funktionsteil 12, insbesondere ein Fußteil 14 zur Verankerung im Boden 16 oder Kopfteil 18 zur Abspannung eines Spannseils 20 eingesetzt ist. Über das Spannseil 20 kann beispielsweise eine Gewebe- oder Folienbahn auf einer Reihe von Stützpfosten 10 firstseitig aufgespannt werden. Dabei können schräg gestellte Stützpfosten 10' am Reihenende für eine günstige Seilableitung zur Bodenverankerung hin sorgen.

Wie am besten aus Fig. 2 ersichtlich, ist der Stützpfosten 10 aus drei in seiner Längsrichtung sich erstreckenden geraden Längsstäben 22, 24, 26 und zwei die Längsstäbe im seitlichen Abstand voneinander zusammenhaltenden, im Vergleich zu den Längsstäben dünneren Verbindungsdrähten 28, 30 zusammengesetzt. Im Querschnitt gesehen liegen die Längsstäbe 22, 24, 26 an den Eckpunkten eines gedachten gleichschenkligen Dreiecks, während die Verbindungsdrähte 28, 30 zickzack- bzw. wellenförmig in jeweils einer Drahtebene verlaufen, wobei die Drahtebenen entsprechend den Schenkeln des Dreiecks einen spitzen Winkel miteinander einschließen.

Die beiden nicht miteinander verbundenen Längsstäbe 24, 26 bilden dabei Nebenstützstreben 32, die über die Verbindungsdrähte 28, 30 mit dem dickeren Längsstab 22 als Hauptstützstrebe 34 starr verbunden sind. Die Scheitelstellen 36, 38 der Verbindungsdrähte 28, 30 sind abwechselnd mit der Hauptstützstrebe 34 und der jeweiligen Nebenstützstrebe 32 verschweißt, wobei die Nebenstützstreben 32 an den voneinander abgewandten Außenbereichen der Verbindungsdrähte 28, 30 angeordnet sind und die Hauptstützstrebe 34 im Verbindungsbereich zwischen den Verbindungsdrähten 28, 30 angeordnet ist.

In diesem Gebilde als Gitterstruktur 40 ist es möglich, die Funktionsteile 12 in ihrer funktionalen Stellung an den Verbindungsdrähten 28, 30 gegen eine ungewollte Längsbewegung bzw. Verstellung längs des Stützpfostens zu sichern, wie es weiter unten näher erläutert wird.

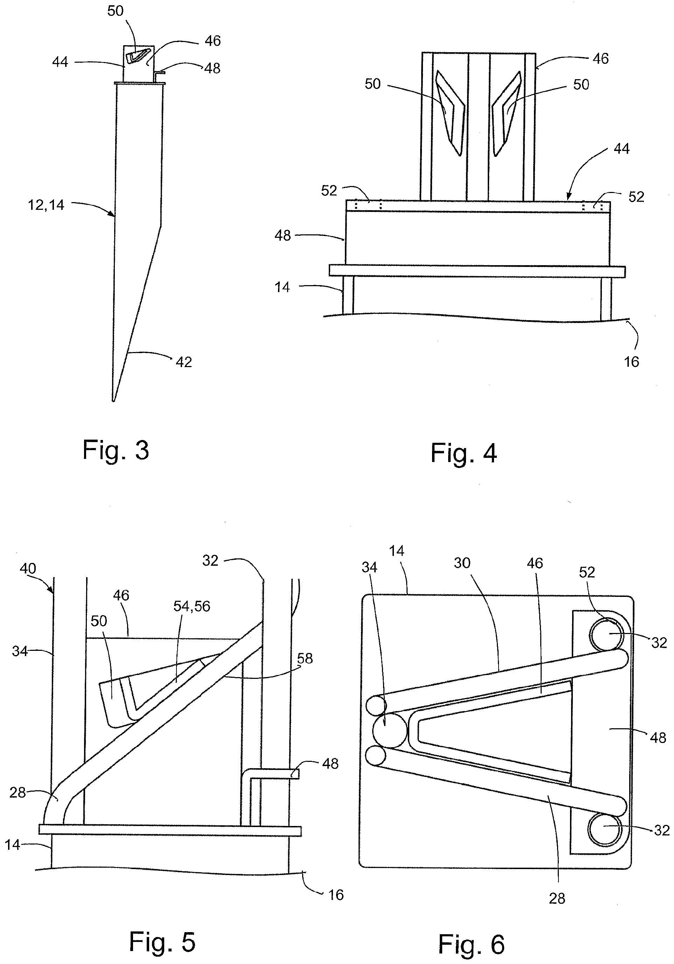

Fig. 3 zeigt ein Funktionsteil 12 in Form eines Fußteils 14, das eine in den Boden 16 bzw. in das Erdreich einsteckbare untere Spitze 42 und einen mit der Gitterstruktur verbindbaren oberen Verbindungsabschnitt 44 aufweist. Letzterer umfasst eine nach oben abstehende Stützpartie 46 und ein seitlich auskragendes Winkelstück 48.

Fig. 4 verdeutlicht die Form des Verbindungsabschnitts 44 in einer gegenüber Fig. 3 um 90° gedrehten vergrößerten Seitenansicht. Die Stützpartie 46 ist im Querschnitt V-förmig ausgebildet und besitzt an ihren Schenkeln zwei korrespondierende Durchbrüche 50. Das Winkelstück 48 ist an seinem horizontalen Steg mit zwei vertikalen Bohrungen 52 versehen.

Wie aus Fig. 5 und 6 in der funktionalen Stellung erkennbar, liegt die Stützpartie 46 formschlüssig zwischen den Ebenen der Verbindungsdrähte 28, 30, während die Nebenstützstreben 32 mit ihren freien Enden durch die Bohrungen 52 des Winkelstücks 48 hindurchgreifen. Auf diese Weise kann die Gitterstruktur 40 einfach auf das bereits in den Boden 16 eingesetzte Fußteil 14 aufgestellt werden.

Um ein Abheben der Gitterstruktur 40 zu verhindern, ist das Fußteil 14 zusätzlich durch ein Sicherungselement 54 gegen Lösen von dem Stützpfosten 10 gesichert. Bei dem in Fig. 4 gezeigten Ausführungsbeispiel ist das Sicherungselement 54 durch einen abgewinkelten Profilstab 56 gebildet, die horizontal durch die Durchbrüche 50 hindurchgesteckt ist und an den Schrägabschnitten 58 der Verbindungsdrähte 28 abgestützt ist. Somit lässt sich auch dieser Aufbauschritt einfach bewerkstelligen, wobei ggf. auch ein Rückbau bzw. Entfernen der Stützstruktur durch Herausziehen des Sicherungselements 52 mit geringem Aufwand möglich ist.

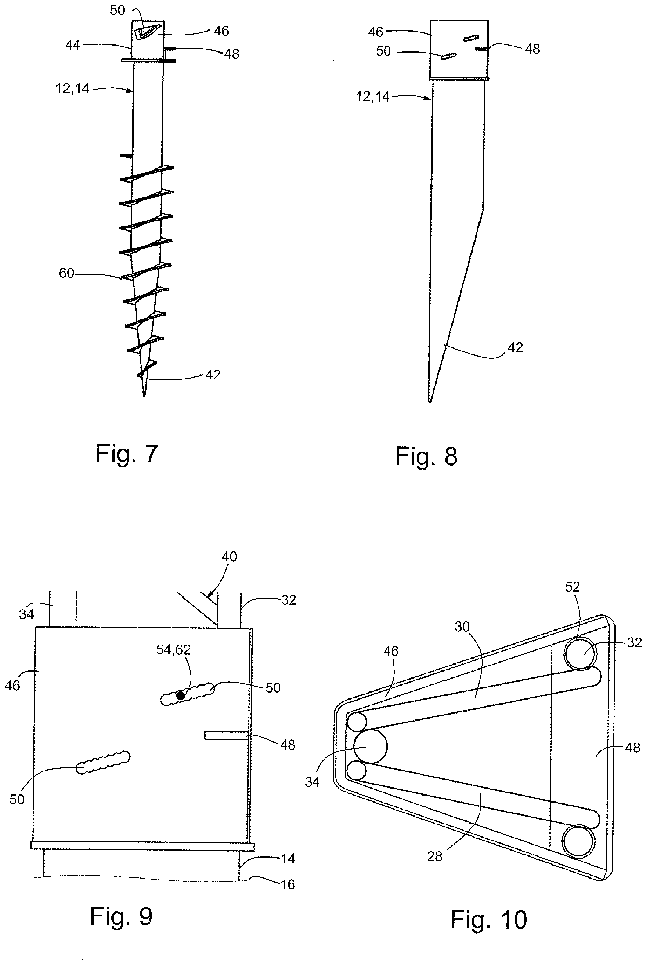

Bei den in Fig. 7 bis 10 gezeigten Ausführungsbeispielen eines Fußteils 14 sind gleiche oder ähnliche Teile mit denselben Bezugszeichen versehen wie vorstehend beschrieben.

Im Unterschied zu dem Beispiel gemäß Fig. 3 besitzt das Fußteil 14 nach Fig. 7 eine in den Boden einschraubbare Spitze 42, die zu diesem Zweck mit einem Gewindegang 60 versehen ist.

Fig. 8 bis 10 zeigt ein Fußteil 14 mit einem becherartigen Verbindungsabschnitt 46, in welchem Langlöcher 50 aus nebeneinanderliegenden Bohrungslöchern gebildet sind. Der Verbindungsabschnitt 46 umgreift in der funktionalen Stellung formschlüssig den unteren Abschnitt der Gitterstruktur 40. Zur axialen Sicherung sind Bolzen 62 als Sicherungselement 54 an geeigneter Stelle in die Langlöcher 50 eingesteckt und an den Verbindungsdrähten 28, 30 abgestützt.

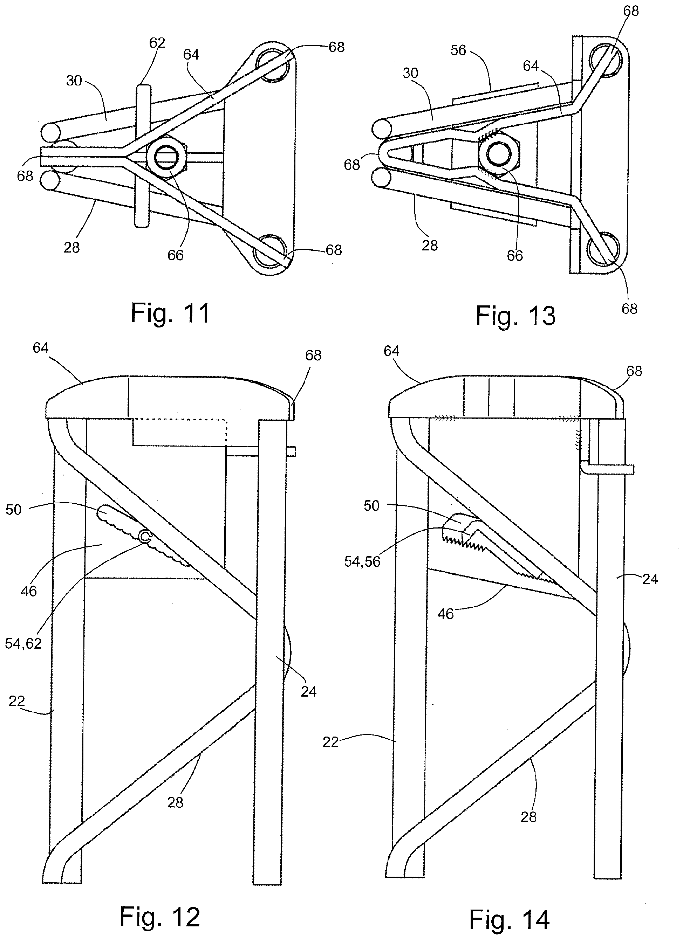

Fig. 11 und 12 zeigt das Kopfteil 18 in seiner funktionalen Stellung bzw. Einbaustellung am oberen Ende des Stützpfostens 10. Auch hier wird das besondere Konstruktions- bzw. Verbindungsprinzip einer stabilen Druckableitung über die Längsstäbe 22, 24, 26 und einer axialen Sicherung an den Verbindungsdrähten 28, 30 eingesetzt. Eine nach oben weisende Seilhalterung 64 weist eine Schraubmutter 66 auf, in welche eine nicht gezeigte Seilführung einschraubbar ist. Die Seilhalterung 64 besitzt Stützflügel 68, die auf den oberen freien Enden der Längsstäbe 22, 24, 26 anliegen. Um eine axiale Ausziehsicherung zu erreichen, ist analog zu den Fußteilen 14 eine Stützpartie 46 vorgesehen, die über ein Sicherungselement 54 in Form eines Bolzens 62 oder eines Profilstabs 56 an den Verbindungsdrähten 28,30 gesichert ist.

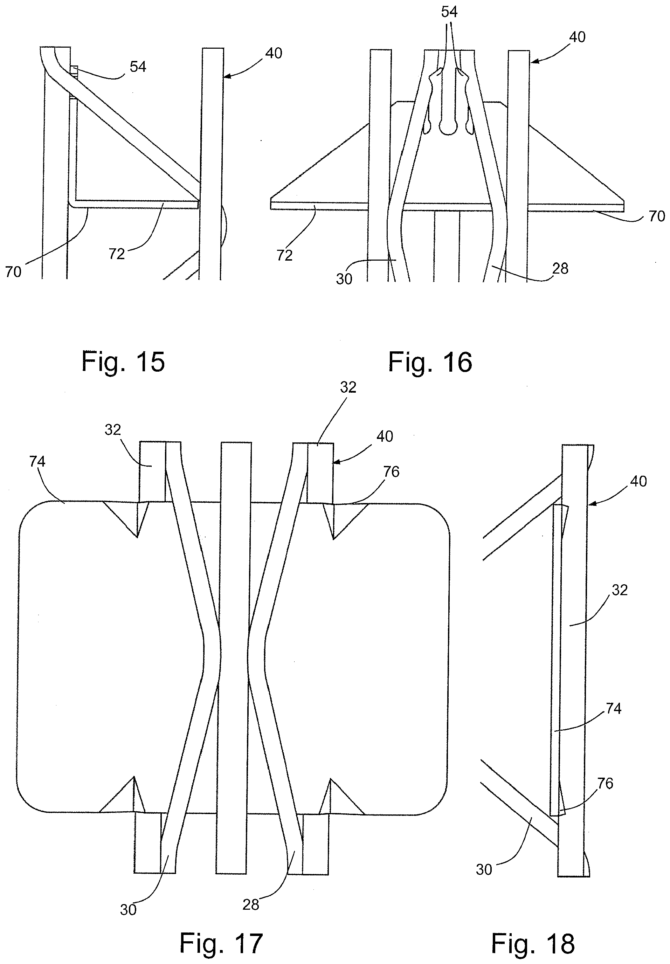

Als weiteres Funktionsteil kann eine in Fig. 15 und 16 in zwei Seitenansichten beispielhaft gezeigte Bodenabstützung 70 vorgesehen sein, die als Winkelstück in einen Bodenabschnitt der Gitterstruktur 40 eingesetzt ist und mit ihrem Horizontalschenkel 72 eine Bodenabstützung ermöglicht. Auf diese Weise kann ein unterer Abschnitt der Gitterstruktur 40 direkt in den Boden 16 gedrückt werden, während der Horizontalschenkel 72 auf der Bodenoberfläche aufliegt. Die axiale Abstützung wird hierbei durch ein Sicherungselement 54 in Form von Rastfedern erreicht, die an den Verbindungsdrähten 28, 30 einhaken.

Fig. 17 und 18 zeigen als noch ein weiteres Funktionsteil eine Stabilisierungsplatte 74, die in vertikaler Ausrichtung in die Gitterstruktur 40 eingesetzt ist, um Querbelastungen aufzunehmen und eine Seitenstabilisierung insbesondere dann zu gewährleisten, wenn der Pfosten 10 nicht durch eine Querverspannung gesichert ist. Dadurch kann es auch ermöglicht werden, die Gitterstruktur 40 direkt in das Erdreich einzusetzen, ohne dass ein zusätzliches Fußteil die Querbelastungen aufnimmt. Die axiale Sicherung der Stabilisierungsplatte 74 erfolgt in dem gezeigten Beispiel durch Formschluss der Plattenlängskanten mit den Verbindungsdrähten 28, 30. Als zusätzliches Positionierungsmittel sind Sicken 76 in die Stabilisierungsplatte 74 so eingebracht, dass ein seitlicher Eingriff an den Nebenstützstreben 32 erreicht wird.

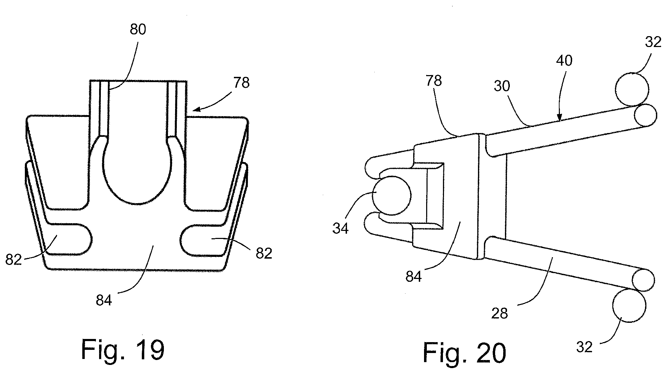

Fig. 19 und 20 zeigt ein weiteres Funktionsteil zum Einbau in die Gitterstruktur 40 als Drahtführung 78 an einer gewünschten Höhe des Stützpfostens 10. Zu diesem Zweck ist ein Formteil mit einer Zentralnut 80 zum Einclipsen an der Hauptstützstrebe 34 und zwei Seitennuten 82 zur Abstützung an den Verbindungsdrähten 28, 30 ausgebildet. Somit wird durch einen Formschluss eine funktionale Stellung in einer gewünschten Höhe des Stützpfostens 10 gesichert. Um einen Draht oder ein Halterungsseil umzulenken, ist eine vorzugsweise konkave Führungsfläche 84 zwischen den seitlichen Öffnungen der Nuten 80 und 82 vorgesehen.

## Patentansprüche

1. Stützstruktur für Pflanzenkulturen mit mindestens einem Stützpfosten (10), der als räumliches Gittergebilde (40) aus längslaufenden Längsstäben (22,24,26) und aus die Längsstäbe im seitlichen Abstand voneinander zusammenhaltenden Verbindungsdrähten (28,30) zusammengesetzt ist, und einem in das Gittergebilde (40) eingesetzten Funktionsteil (12) für eine Funktion aus der Gruppe Bodenverankerung, Bodenabstützung, Stabilisierung, Spannseilabspannung, Pflanzenhalterung, **dadurch gekennzeichnet, dass** das Funktionsteil (12) an den Verbindungsdrähten (28,30) gegen eine Relativbewegung längs des Stützpfostens (10) gesichert ist, wobei das Funktionsteil (12) über ein Sicherungselement (54) und/oder über eine Formschlussverbindung mit den Verbindungsdrähten (28,30) in Eingriff bringbar ist.

2. Stützstruktur nach Anspruch 1, **dadurch gekennzeichnet, dass** das Sicherungselement (54) in einen Durchbruch (50) des Funktionsteils (12) lösbar einsteckbar ist.

3. Stützstruktur nach Anspruch 1 oder 2, **dadurch gekennzeichnet, dass** das Sicherungselement (54) an einem schräg zur Längsachse des Stützpfostens (10) verlaufenden Abschnitt der Verbindungsdrähte (28,30) axial abgestützt ist.

4. Stützstruktur nach einem der Ansprüche 1 bis 3, **dadurch gekennzeichnet, dass** das Sicherungselement (54) durch einen Bolzen (62) oder einen ggf. winkligen Profilstab (56) gebildet ist.

5. Stützstruktur nach einem der Ansprüche 1 bis 4, **dadurch gekennzeichnet, dass** das Funktionsteil (12) einen in das Gittergebilde (40) einführbaren oder daran ansetzbaren Verbindungsabschnitt (46) aufweist.

6. Stützstruktur nach einem der Ansprüche 1 bis 5, **dadurch gekennzeichnet, dass** ein als Fußteil (14) ausgebildetes Funktionsteil (12) eine in den Boden einsteckbare oder einschraubbare Spitze aufweist.

7. Stützstruktur nach einem der Ansprüche 1 bis 6, **dadurch gekennzeichnet, dass** ein als Kopfteil (18) ausgebildetes Funktionsteil (12) eine im Einbauzustand nach oben weisende Seilhalterung (64) für ein Spannseil (20) aufweist.

8. Stützstruktur nach einem der Ansprüche 1 bis 7, **dadurch gekennzeichnet, dass** zwei Verbindungsdrähte (28,30) entlang den Längsstäben (22,24,26) durchgehend verlaufen und dabei an Verbindungsstellen abwechselnd mit einem eine Hauptstützstrebe (34) bildenden gemeinsamen Längsstab (22) und jeweils einem eine Nebenstützstrebe (32) bildenden weiteren Längsstab (24,26) fest verbunden sind, so dass der Gitterträger zwischen den Nebenstützstreben (32) einseitig offen ist.

9. Stützstruktur nach Anspruch 8, **dadurch gekennzeichnet, dass** die Verbindungsdrähte (28,30) in jeweils einer Ebene verlaufen, wobei die beiden durch die Verbindungsdrähte (28,30) aufgespannten Ebenen einen spitzen Winkel miteinander einschließen.

10. Stützstruktur nach Anspruch 8 oder 9, **dadurch gekennzeichnet, dass** die Verbindungsdrähte (28,30) über gebogene Scheitelstellen (36,38) zickzackförmig oder wellenförmig verlaufen, und dass die Scheitelstellen (36,38) stoffschlüssig, vorzugsweise über Schweißverbindungen mit den Längsstäben (22,24,26) verbunden sind.

11. Stützstruktur nach einem der Ansprüche 8 bis 10, **dadurch gekennzeichnet, dass** die Nebenstützstreben (32) an den voneinander abgewandten Außenbereichen der Verbindungsdrähte (28,30) angeordnet sind.

12. Stützstruktur nach einem der Ansprüche 8 bis 11, **dadurch gekennzeichnet, dass** die Hauptstützstrebe (34) im Verbindungsbereich zwischen den Verbindungsdrähten (28,30) angeordnet ist.

## Claims

1. Support structure for plant cultures, having at least one support post (10) which is composed as a spatial lattice structure (40) of longitudinally extending longitudinal bars (22,24,26) and of connecting wires (28,30) holding the longitudinal bars together at a lateral distance from one another, and having a functional part (12) inserted into the lattice structure (40) for a function from the group of ground anchoring, ground support, stabilization, tensioning cable bracing, plant support, **characterized in that** the functional part (12) is secured to the connecting wires (28,30) against a relative movement along the support post (10), wherein the functional part (12) can be brought into engagement with the connecting wires (28,30) via a securing element (54) and/or via a form-fitting connection.

2. Support structure according to claim 1, **characterized in that** the securing element (54) can be releasably inserted into an opening (50) of the functional part (12).

3. Support structure according to either claim 1 or claim 2,
**characterized in that** the securing element (54) is axially supported on a portion of the connecting wires (28,30) which runs obliquely to the longitudinal axis of the support post (10).

4. Support structure according to any of claims 1 to 3, **characterized in that** the securing element (54) is formed of a bolt (62) or an optionally angled profile bar (56).

5. Support structure according to any of claims 1 to 4, **characterized in that** the functional part (12) has a connecting portion (46) which can be inserted into the lattice structure (40) or attached thereto.

6. Support structure according to any of claims 1 to 5, **characterized in that** a functional part (12) designed as a foot part (14) has a tip that can be inserted or screwed into the ground.

7. Support structure according to any of claims 1 to 6, **characterized in that** a functional part (12) designed as a head part (18) has a cable holder (64) for a tensioning cable (20), which cable holder points upwards in the installed state.

8. Support structure according to any of claims 1 to 7, **characterized in that** two connecting wires (28,30) extend continuously along the longitudinal bars (22,24,26) and are firmly connected, at connection points, alternately to a common longitudinal bar (22) forming a main support strut (34) and to a further longitudinal bar (24,26) forming a secondary support strut (32), so that the lattice beam is open on one side between the secondary support struts (32).

9. Support structure according to claim 8, **characterized in that** the connecting wires (28,30) each extend in a plane, wherein the two planes spanned by the connecting wires (28,30) enclose an acute angle with each other.

10. Support structure according to either claim 8 or claim 9,
**characterized in that** the connecting wires (28,30) extend in a zigzag or wave-like manner over curved apex points (36,38), and **in that** the apex points (36,38) are connected to the longitudinal bars (22,24,26) in an integrally-bonded manner, preferably via welded connections.

11. Support structure according to any of claims 8 to 10,
**characterized in that** the secondary support struts (32) are arranged on the outer regions of the connecting wires (28,30) that face away from one another.

12. Support structure according to any of claims 8 to 11,
**characterized in that** the main support strut (34) is arranged in the connection region between the connecting wires (28,30).

## Revendications

1. Structure de support pour cultures végétales comportant au moins un poteau de support (10) qui est composé, sous la forme d'une armature en treillis (40) spatiale, de barres longitudinales (22, 24, 26) s'étendant longitudinalement et de fils de liaison (28, 30) maintenant les barres longitudinales à distance latérale les unes des autres, et une partie fonctionnelle (12) insérée dans l'armature en treillis (40) pour une fonction dans le groupe comprenant ancrage au sol, support au sol, stabilisation, haubanage par câbles de tension, maintien de plantes, **caractérisée en ce que** la partie fonctionnelle (12) est bloquée sur les fils de liaison (28, 30) à l'encontre d'un mouvement relatif le long du poteau de support (10), dans laquelle la partie fonctionnelle (12) peut être mise en prise avec les fils de liaison (28, 30) par l'intermédiaire d'un élément de blocage (54) et/ou par l'intermédiaire d'une liaison par complémentarité de forme.

2. Structure de support selon la revendication 1, **caractérisée en ce que** l'élément de blocage (54) peut être enfoncé de manière amovible dans une ouverture (50) de la partie fonctionnelle (12).

3. Structure de support selon la revendication 1 ou 2,
**caractérisée en ce que** l'élément de blocage (54) est supporté axialement sur une section des fils de liaison (28, 30), laquelle section s'étend obliquement par rapport à l'axe longitudinal du poteau de support (10).

4. Structure de support selon l'une des revendications 1 à 3,
**caractérisée en ce que** l'élément de blocage (54) est formé par un boulon (62) ou une barre profilée (56) éventuellement coudée.

5. Structure de support selon l'une des revendications 1 à 4,
**caractérisée en ce que** la partie fonctionnelle (12) présente une section de liaison (46) pouvant être introduite dans l'armature en treillis (40) ou pouvant être fixée à celle-ci.

6. Structure de support selon l'une des revendications 1 à 5,
**caractérisée en ce qu'**une partie fonctionnelle (12) réalisée sous forme de partie formant pied (14) présente une pointe pouvant être enfoncée ou vissée dans le sol.

7. Structure de support selon l'une des revendications 1 à 6,
**caractérisée en ce qu'**une partie fonctionnelle (12) réalisée sous forme de partie formant tête (18) présente un moyen de maintien de câble (64) pour un câble de tension (20), lequel moyen de maintien de câble est orienté vers le haut à l'état monté.

8. Structure de support selon l'une des revendications 1 à 7,
**caractérisée en ce que** deux fils de liaison (28, 30) s'étendent de façon continue le long des barres longitudinales (22, 24, 26) et sont ainsi reliés de manière fixe, en des points de liaison, alternativement à une barre longitudinale (22) commune formant une entretoise de support principale (34) et à respectivement une autre barre longitudinale (24, 26) formant une entretoise de support secondaire (32), de sorte que le support en treillis est ouvert d'un côté entre les entretoises de support secondaires (32).

9. Structure de support selon la revendication 8, **caractérisée en ce que** les fils de liaison (28, 30) s'étendent dans respectivement un plan, dans laquelle les deux plans définis par les fils de liaison (28, 30) forment entre eux un angle aigu.

10. Structure de support selon la revendication 8 ou 9, **caractérisée en ce que** les fils de liaison (28, 30) s'étendent sous forme de zigzag ou d'ondulation par l'intermédiaire de sommets (36, 38) courbés, **et en ce que** les sommets (36, 38) sont reliés aux barres longitudinales (22, 24, 26) par liaison de matière, de préférence par l'intermédiaire de liaisons par soudage.

11. Structure de support selon l'une des revendications 8 à 10,
**caractérisée en ce que** les entretoises de support secondaires (32) sont disposées sur les zones extérieures des fils de liaison (28, 30) qui sont opposées les unes aux autres.

12. Structure de support selon l'une des revendications 8 à 11, **caractérisée en ce que** l'entretoise de support principale (34) est disposée dans la zone de liaison entre les fils de liaison (28, 30).
